(19) Europäisches Patentamt
European Patent Office
Office européen des brevets

(11) **EP 1 961 960 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
*F04B 41/00* (2006.01)   *F04B 49/02* (2006.01)
*F04B 49/06* (2006.01)   *F04B 49/10* (2006.01)
*B60G 11/27* (2006.01)   *B60G 17/04* (2006.01)

(21) Anmeldenummer: **08002142.1**

(22) Anmeldetag: **06.02.2008**

(54) **Verfahren zur Steuerung eines Kompressors und Vorrichtung zur Durchführung des Verfahrens**

Method for controlling a compressor and device for executing the method

Procédé destiné à la commande d'un compresseur et dispositif d'exécution du procédé

(84) Benannte Vertragsstaaten:
**DE FR GB PL**

(30) Priorität: **22.02.2007 DE 102007008736**

(43) Veröffentlichungstag der Anmeldung:
**27.08.2008 Patentblatt 2008/35**

(73) Patentinhaber: **WABCO GmbH**
**30453 Hannover (DE)**

(72) Erfinder: **Meier, Jörg**
**31840 Hessisch Oldendorf (DE)**

(74) Vertreter: **Günther, Constantin**
**WABCO GmbH**
**Postfach 91 12 62**
**30432 Hannover (DE)**

(56) Entgegenhaltungen:
**DE-A1- 2 344 850    DE-C1- 19 621 946**
**DE-C2- 19 812 234    US-A- 5 546 015**

**Beschreibung**

Die Erfindung betrifft ein Verfahren zur Steuerung eines Kompressors gemäß dem Oberbegriff des Patentanspruchs 1. Des Weiteren betrifft die Erfindung eine Vorrichtung zur Durchführung des Verfahrens.

Beim Betrieb eines Kompressors ist darauf zu achten, dass bestimmte Temperaturgrenzen nicht überschritten werden, um Schäden zu vermeiden. Zur Vermeidung von Schäden wird der Kompressor bei dem Erreichen einer oberen Temperaturgrenze abgeschaltet. Beschädigungen des Kompressors infolge von Überhitzung können z.B. am Druckventil auftreten, etwa infolge einer Materialversprödung und einer sich hieraus ergebenden Oberflächenbeschädigung, die zu Undichtigkeiten am Ventil führt. Des Weiteren kann der Kolbenring Schaden nehmen, was zur Zerstörung des Kolbenrings und infolgedessen zu einem Ausfall des Kompressors führen kann.

Eine Möglichkeit zur Einhaltung von Temperaturgrenzen stellt eine Überwachung von kritischen Bauteilen des Kompressors mittels Temperatursensoren dar. Aufgrund der benötigten Temperatursensoren ist diese Möglichkeit jedoch kostenaufwendig.

Eine andere Möglichkeit stellt eine Berechnung von kritischen Temperaturen mittels einer Simulation oder eines Modells dar. So können z. B. in Abhängigkeit von Umgebungstemperatur, Gegendruck, gegen den der Kompressor arbeiten muss, und Betriebsspannung des Kompressors die Temperaturen von Bauteilen des Kompressors berechnet werden. Aus der DE 196 21 946 C1 ist eine Steueranordnung für einen Kompressor bekannt, bei der aufgrund von Erfahrungswerten ein Schätzwert für die Betriebstemperatur des Kompressors ermittelt wird. Bei Überschreiten eines vorgegebenen Temperaturschwellenwertes kann der Kompressor dann automatisch abgeschaltet werden. Des Weiteren ist aus der DE 198 12 234 C2 bekannt, die Wärmeübertragungsbedingungen in der Umgebung des Kompressors abzuschätzen, z. B. anhand einer entsprechenden Modellbetrachtung, und in Abhängigkeit dieser Schätzdaten den Kompressor dann zu steuern. Derartige Verfahren können kostengünstig realisiert werden, da keine Temperatursensoren benötigt werden.

Dafür können bei diesen Verfahren die realen Temperaturbedingungen an dem Kompressor nur angenähert, d. h. durch Schätzwerte, berücksichtigt werden. Die Abweichungen zwischen den realen und berechneten Temperaturen haben jedoch eine relativ ineffiziente Ausnutzung des Kompressors zur Folge, da der Kompressor zur sicheren Vermeidung einer Beschädigung abgeschaltet wird, obwohl die obere Temperaturgrenze noch gar nicht erreicht ist.

Das US-Patent US5546015 beschreibt ein Verfahren zur Erkennung von einer Fehlfunktion in einem Kompressor. Die Fehlfunktion wird anhand eines Stromsensors und eines Massendurchflussmessgerätes, welches den angesaugten Massenstrom des Kompressors bestimmt, und eines Kompressionsverhältnissensors ermittelt. Wenn ein Stromgrenzwert überschritten wird, dann wird auf eine Fehlfunktion des Kompressors erkannt und ein Alarm ausgelöst.

Der Stromgrenzwert steigt mit einem ansteigenden Massendurchfluss oder einem ansteigenden Kompressionsverhältnisses an.

Der Erfindung liegt daher die Aufgabe zugrunde, ein Verfahren zur Steuerung eines Kompressors und eine Vorrichtung zur Durchführung des Verfahrens zur Verfügung zu stellen, welche eine effiziente Ausnutzung eines Kompressors ermöglichen.

Diese Aufgabe wird gelöst durch ein Verfahren zur Steuerung eines Kompressors, wobei mit Hilfe einer Simulation oder eines Modells eine Größe ermittelt wird und der Kompressor in Abhängigkeit von der ermittelten Größe abgeschaltet werden kann, wobei die Größte eine Temperatur ist, welche in Abhängigkeit des Wirkungsgrades des Kompressors ermittelt wird. Unter einem Wirkungsgrad des Kompressors ist z. B. der von dem Kompressor erzeugte Volumenstrom zu verstehen. So erzeugt ein Kompressor mit einem hohen Wirkungsgrad einen hohen Volumenstrom und ein Kompressor mit einem niedrigen Wirkungsgrad einen niedrigen Volumenstrom. Ein Wirkungsgrad des Kompressors im Rahmen der Erfindung kann aber auch andere dem Fachmann geläufige Wirkungsgrade von Kompressoren umfassen.

Unter der ermittelten Größe ist die Temperatur des Kompressors oder eines Bauteils des Kompressors zu verstehen. Die Erfindung nutzt die Erkenntnis aus, dass die Erwärmung des Kompressors abhängig von seinem Wirkungsgrad ist. So erwärmt sich z. B. ein Druckventil eines Kompressors mit einem hohen Wirkungsgrad, d. h. z. B. von einem Kompressor, der einen hohen Volumenstrom erzeugt, schneller, im Vergleich zu einem Kompressor mit einem geringeren Wirkungsgrad. Durch die Berücksichtigung des Wirkungsgrades des Kompressors bei der Ermittlung der Temperatur wird die Übereinstimmung zwischen der ermittelten Temperatur und der realen Temperatur im Vergleich zu den aus dem Stand der Technik bekannten Verfahren verbessert. Hierdurch resultiert eine bessere Ausnutzung des Kompressors, da bei den aus dem Stand der Technik bekannten Verfahren zur sicheren Einhaltung der Temperaturgrenzen bei der Ermittlung der Temperatur immer von einem Kompressor mit einem hohen Wirkungsgrad ausgegangen wird.

Durch die mit der Erfindung durchgeführte Anpassung der Temperaturüberwachung an den jeweiligen Wirkungsgrad des Kompressors können Kompressoren mit einem geringen Wirkungsgrad, d. h. z. B. mit einem geringen erzeugten Volumenstrom, ohne Überhitzung länger betrieben werden, als Kompressoren mit einem hohen Wirkungsgrad. Durch den längeren Betrieb erzeugt ein Kompressor mit einem geringen Wirkungsgrad für einen bestimmten Beobachtungszeitraum das gleiche Volumen an Druckluft wie ein Kompressor mit hohem Wirkungsgrad. Durch die unterschiedliche Betriebsdauer werden somit die Leistungsunterschiede zwischen Systemen, die Kompressoren unterschiedlichen Wirkungsgrades beinhalten, minimiert. Es ist anzumerken, dass für die Ermittlung der Temperatur neben dem Wirkungsgrad des Kompressors weitere Parameter, wie z. B. Umgebungstemperatur, Gegendruck und Betriebsspannung des Kompressors, berücksichtigt werden können. Die Erfindung ermöglicht, trotz des Verzichts auf Temperatursensoren, eine sehr gute Übereinstimmung zwischen realer und durch Simulation oder Modell ermittelter Temperatur.

Unter der Ermittlung der Temperatur mit Hilfe einer Simulation oder eines Modells im Sinne dieser Anmeldung ist zu verstehen, dass die Temperatur nicht ausschließlich anhand eines Temperatursensors ermittelt wird. Die Ermittlung der Temperatur mit Hilfe einer Simulation oder eines Modells umfasst auch die Ermittlung der Temperatur anhand von Kennlinien oder Kennlinienfeldern oder mathematischer Formeln. Sie kann weiterhin die Ermittlung einer Temperatur unter Einbeziehung der Signale eines Temperatursensors umfassen. So ist es denkbar, dass z. B. die Temperatur der den Kompressor umgebenden Luft mit einem Temperatursensor erfasst wird und anhand der Signale des Temperatursensors mit Hilfe des erfindungsgemäßen Verfahrens die Temperatur eines Druckventils des Kompressors ermittelt wird.

In einer vorteilhaften Ausgestaltung der Erfindung wird der Kompressor in Abhängigkeit seines Wirkungsgrades einer Klasse zugeteilt und die Temperatur in Abhängigkeit der zugeteilten Klasse ermittelt. Diese Ausgestaltung ermöglicht eine besonders effiziente Ermittlung der Temperatur.

In einer weiteren vorteilhaften Ausgestaltung der Erfindung kann die Abschaltung in Abhängigkeit der ermittelten Temperatur eines in dem Kompressor vorhandenen Druckventils und/oder in Abhängigkeit einer ermittelten Temperatur eines in dem Kompressor vorhandenen Kolbenrings und/oder in Abhängigkeit einer ermittelten Temperatur eines den Kompressor antreibenden Elektromotors erfolgen. Da oftmals das Druckventil oder der Kolbenring oder der den Kompressor antreibenden Elektromotor die am stärksten temperaturbeanspruchten Bauteile des Kompressors darstellen, wird der Kompressor durch diese Ausgestaltung zuverlässig gegen die Überschreitung einer Temperaturgrenze geschützt.

Gemäß einer weiteren Ausführung wird der Wirkungsgrad des Kompressors mittels einer Zeitspanne bestimmt, die der Kompressor für einen Anstieg eines Druckes in einem Druckspeicher, der von dem Kompressor mit Druckmittel versorgt wird, um einen festgelegten Wert benötigt. Diese Ausführung ermöglicht eine einfache und genaue Bestimmung des Wirkungsgrades.

Entsprechend einer weiteren Ausgestaltung erfolgt die Bestimmung des Wirkungsgrades automatisch. Der Aufwand zur Bestimmung des Wirkungsgrades wird hierdurch reduziert. Die Bestimmung kann z. B. mit Hilfe eines den Kompressor steuernden Steuergerätes erfolgen.

Vorteilhafterweise kann die Zeitspanne in Abhängigkeit einer Betriebsspannung des Kompressors und/oder eines Druckes der den Kompressor umgebenden Luft korrigiert werden. Hierdurch wird eine von der Betriebsspannung des Kompressors und des Druckes der den Kompressor umgebenden Luft unabhängige Bestimmung des Wirkungsgrades gewährleistet.

Vorteilhaft ist auch eine Ausgestaltung, bei der eine Bestimmung des Wirkungsgrades des Kompressors und/oder eine Klassifizierung des Kompressors (Zuteilung der Klasse) bei einer Inbetriebnahme eines Systems, in dem der Kompressor verbaut ist, durchgeführt wird. Diese Ausgestaltung vermeidet die Bestimmung des Wirkungsgrades und/oder die Klassifizierung im Rahmen der Produktion des Kompressors. Somit wird der Aufwand für die Produktion vermindert. Das System kann z. B. ein Luftfedersystem für Fahrzeuge sein.

In einer weiteren vorteilhaften Ausgestaltung der Erfindung erfolgt im Rahmen einer Inspektion des Systems eine erneute Bestimmung des Wirkungsgrades des Kompressors und/oder eine erneute Klassifizierung des Kompressors. Hierdurch werden alterungsbedingte Veränderungen des Kompressors bei der Bestimmung des Wirkungsgrades des Kompressors und/oder der Klassifizierung des Kompressors berücksichtigt.

In einer weiteren vorteilhaften Ausführung erfolgt eine regelmäßige Bestimmung des Wirkungsgrades des Kompressors und/oder eine regelmäßige Klassifizierung des Kompressors. Unter regelmäßig sind z. B. die Durchführung einer Bestimmung des Wirkungsgrades des Kompressors und/oder einer Klassifizierung des Kompressors bei jeder Inbetriebnahme des Systems oder in bestimmten Zeitintervallen zu verstehen. Hierdurch wird das Ergebnis der Bestimmung des Wirkungsgrades des Kompressors und/oder der Klassifizierung des Kompressors verbessert.

Vorteilhaft ist eine Ausführung, bei der eine Änderung der Klasse nur erfolgt, falls eine bestimmte Anzahl von aufeinander folgenden Klassifizierungen mit dem gleichen Ergebnis erreicht wird. Hierdurch wird der Einfluss von zufälligen Fehlern auf das Ergebnis der Klassifizierung minimiert.

Bei dieser Ausführung ist es vorteilhaft, wenn die benötigte Anzahl für eine Erhöhung der Klasse kleiner als die für eine Verringerung der Klasse ist. Hierdurch wird der Schutz des Kompressors gegen unzulässig hohe Temperaturen verbessert. Unter einer Erhöhung der Klasse ist zu verstehen, dass der Kompressor einer Klasse mit höherem Wirkungsgrad zugeteilt wird. Unter einer Verringerung der Klasse ist zu verstehen, dass der Kompressor einer Klasse mit geringerem Wirkungsgrad zugeteilt wird.

In einer weiteren vorteilhaften Ausgestaltung erfolgt die Klassifizierung in Abhängigkeit eines Volumens des Druckspeichers und des Kompressortyps. So kann die Anzahl der Klassen und/oder die Zeitspanne an das Volumen des Druckspeichers und die Typenklasse, bzw. die Nennleistung des Kompressors angepasst werden.

Eine weitere Ausführung zeichnet sich durch einen Einsatz des Kompressors in einem Fahrzeug aus.

Bei einer weiteren Ausführung wird der Kompressor in einem Luftfedersystem eingesetzt.

Bei einer weiteren Ausgestaltung wird die Temperatur anhand der Formel

$$T = KA * \left[1 - e^{(-KZ*t)}\right] + T0$$

Ermittelt, wobei T die zu ermittelnde Temperatur des Druckventils, KA und KZ von der Klasse abhängige Konstanten, t die Zeit seit einem Einschaltzeitpunkt des Kompressors und T0 die am Einschaltzeitpunkt des Kompressors herrschende Temperatur bezeichnen.

Weiterhin beinhaltet die Erfindung eine Vorrichtung zur Steuerung eines Kompressors, wobei Mittel den Kompressor in Abhängigkeit eines Wirkungsgrades des Kompressors abschalten.

Des Weiteren beinhaltet die Erfindung eine Vorrichtung zur Steuerung eines Kompressors, wobei mit Hilfe einer Simulation oder eines Modells eine Größe ermittelbar ist und der Kompressor in Abhängigkeit von der ermittelten Größe abschaltbar ist, wobei die Größe eine Temperatur ist, und wobei Mittel diese Temperatur in Abhängigkeit des Wirkungsgrades des Kompressors ermitteln.

Ausführungsbeispiele der Erfindung werden im Folgenden anhand der schematischen Zeichnung erläutert. Es zeigen:

Fig. 1     eine schematische Darstellung einer Druckmittelanlage für eine pneumatische Fahrzeugfederung und

Fig. 2     ein Diagramm, welches Laufzeiten von Kompressoren unterschiedlicher Klassen veranschaulicht.

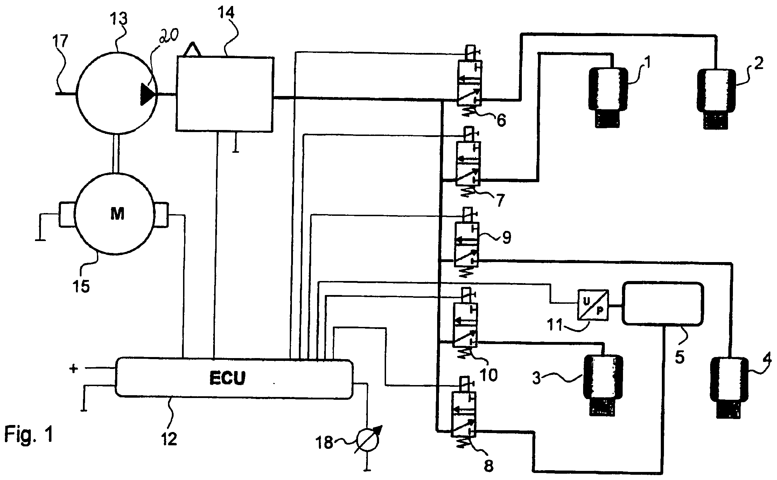

In Fig. 1 ist ein System gezeigt, in dem ein Kompressor 13 verbaut ist. Es handelt sich dabei um eine Luftfederungsanlage für ein Fahrzeug, die vier Luftfederbälge 1, 2, 3, 4 umfasst, die jeweils ein Rad eines vierrädrigen Fahrzeugs abfedern. Die Luftfederbälge 1, 2, 3, 4 sind über pneumatische Leitungen mit 2/2-Wegeventilen 6, 7, 9, 10 verbunden. Des Weiteren ist ein Druckspeicher 5 vorgesehen, der über eine pneumatische Leitung mit einem weiteren 2/2-Wegeventil 8 verbunden ist. Zur Sensierung des Drucks in dem Druckspeicher 5 ist ein Drucksensor 11 mit dem Druckspeicher 5 verbunden.

Die Ventile 6, 7, 8, 9, 10 sind druckmittelseitig über weitere pneumatische Leitungen gemeinsam an einen Lufttrockner 14 mit Regenerationsfunktion angeschlossen. Der Lufttrockner 14 weist eine Regenerationsfunktion bekannter Art auf, bei der Druckluft aus den Luftfederbälgen 1, 2, 3, 4 oder dem Druckspeicher 5 über die Ventile 6, 7, 8, 9, 10 in den Lufttrockner 14 zurückströmt und über einen Regenerationspfad in die Atmosphäre abgelassen werden kann, wobei Feuchtigkeit abgeführt wird.

Der Lufttrockner 14 ist druckmittelseitig mit dem Kompressor 13, z. B. einem Kolbenkompressor üblicher Bauart, verbunden. Der über eine Welle von einem Elektromotor 15 antreibbare Kompressor 13 saugt über einen Ansauganschluss 17 Luft aus der Atmosphäre an. Durch Einschalten des Elektromotors 15 kann komprimierte Luft erzeugt und an die die Druckmittelanlage 1, 2, 3, 4, 5, 6, 7, 8, 9, 10, 14 darstellende Luftfederungsanlage abgegeben werden.

Die Ventile 6, 7, 8, 9 10 sind als elektromagnetisch betätigbare Ventile ausgebildet und mit ihren elektrischen Anschlüssen einerseits mit der elektrischen Masse verbunden, andererseits mit einem elektronischen Steuergerät 12, das zur Steuerung der nachfolgend noch näher beschriebenen Funktionen dient. Des Weiteren ist der Lufttrockner 14 zwecks Aktivierung der Regenerationsfunktion über eine elektrische Leitung mit dem Steuergerät 12 verbunden. Außerdem ist der Elektromotor 15 zur Aktivierung über eine elektrische Leitung mit dem Steuergerät 12 verbunden.

Der Drucksensor 11 ist über weitere elektrische Leitungen mit dem Steuergerät 12 verbunden. Des Weiteren ist mit dem Steuergerät 12 ein z. B. von dem Fahrer des mit der Luftfederungsanlage ausgestatteten Fahrzeuges zu bedienendes Bedienelement 18 verbunden, mit dem die Einstellung verschiedener Fahrzeugniveaus, z.B. eines oberen, eines mittleren und eines unteren Niveaus, möglich ist. Das jeweilige Fahrzeugniveau bzw. die jeweilige Niveaulage an den einzelnen Federbeinen des Fahrzeugs wird über geeignete Wegsensoren gemessen, die in der Fig. 1 der Einfachheit halber nicht dargestellt sind. Diese Wegsensoren bekannter Bauart sind ebenfalls mit dem Steuergerät 12 verbunden.

Das Steuergerät 12 verarbeitet diese Eingangssignale des Drucksensors 11, des Bedienelements 18 und der Wegsensoren und erzeugt hieraus Ansteuersignale für den Elektromotor 15, den Lufttrockner 14 sowie die Ventile 6, 7, 8, 9, 10.

Die Luftfederungsanlage gemäß Fig. 1 arbeitet wie folgt:

Wenn das Steuergerät 12 an einem oder mehreren Federbeinen eine Abweichung zwischen der durch den jeweiligen Wegsensor gemessenen Niveaulage und einer Soll-Niveaulage, die aufgrund des Bedienelements 18 bestimmt wird, feststellt, so steuert es das dem Federbein zugeordnete Magnetventil 6, 7, 9, 10 an, wodurch das Ventil von seiner Sperrstellung in einer Durchlassstellung geschaltet wird. Sofern die Niveaulage erhöht werden soll und somit die Luftmasse in dem Luftfederbalg 1, 2, 3, 4 erhöht werden muss, steuert das elektronische Steuergerät 12 zusätzlich das Magnetventil 8 an, wodurch Druckmittel von dem Druckspeicher 5 in den jeweiligen Luftfederbalg 1, 2, 3, 4 strömen kann. Je nach gewünschtem Druck in dem Luftfederbalg 1, 2, 3, 4 und vorhandenem Druck in dem Druckspeicher 5 schaltet das Steuergerät 12 gegebenenfalls zusätzlich den Elektromotor 15 ein, wodurch der Kompressor 13 in Betrieb gesetzt wird und ein höheres Druckniveau erzeugt werden kann als in dem Druckspeicher 5 noch vorliegt.

Es ist erkennbar, dass bei häufigem Niveauwechsel, z. B. infolge häufiger Betätigung des Bedienelements 18, der Druckluftvorrat in dem Druckspeicher 5 aufgebraucht wird und somit Druckluft durch den Kompressor 13 nachgefördert werden muss. Üblicherweise ist der Druckspeicher 5 für ein- bis zweimaliges vollständiges Absenken und Anheben des Fahrzeugs dimensioniert.

Falls eine Verminderung der Luftmasse in einem Luftfederbalg 1, 2, 3, 4 notwendig ist, so bleibt das Ventil 8 geschlossen und der Kompressor 13 ausgeschaltet. Des Weiteren wird der Lufttrockner 14 in die Regenerationsstellung umgeschaltet, wodurch Druckluft aus dem zu entlüftenden Luftfederbalg 1, 2, 3, 4 in die Atmosphäre strömen kann. Hierbei wird außerdem unerwünschte Feuchtigkeit abgeschieden.

Der Druckspeicher 5 dient dazu, wie zuvor schon angedeutet, eine schnelle Erhöhung der Luftmasse in den Luftfederbälgen 1, 2, 3, 4 und somit ein schnelles Anheben der Niveaulage zu ermöglichen. Wegen der vergleichsweise geringen Fördermenge des Kompressors 13 kann dieser nur langsamer eine Luftmassenerhöhung in den Luftfederbälgen 1, 2, 3, 4 bewirken. Daher ist es zweckmäßig, dass der Druckspeicher 5 ständig auf einem ausreichenden Druckniveau gehalten wird bzw. bei einem Druckabfall das gewünschte ausreichende Druckniveau möglichst schnell wieder hergestellt wird. Zusätzlich soll aber der Kompressor 13 hierbei nicht überlastet werden und nach Möglichkeit auch für eine angeforderte Niveauerhöhung zur Verfügung stehen. Um eine Überlastung des Kompressors 13 zu vermeiden, wird die Temperatur eines in dem Kompressor 13 vorhandenen Druckventils 20 anhand einer Simulation ermittelt. Die Simulation wird in dem Steuergerät 12 anhand dort hinterlegter physikalischer Modelle des Kompressors 13 und der Umgebungsbedingungen durchgeführt.

Die Erfindung sieht vor, dass in vorteilhafter Weise die Temperatur des Druckventils 20 in Abhängigkeit des Wirkungsgrads des Kompressors 13, d. h. in Abhängigkeit des von dem Kompressor erzeugten Volumenstroms, ermittelt wird. Neben dem Wirkungsgrad können auch andere Parameter, wie Umgebungstemperatur, Gegendruck, gegen den der Kompressor 13 arbeiten muss, und Betriebsspannung des Kompressors 13, bei der Ermittlung der Temperatur berücksichtigt werden.

Die Bestimmung des Wirkungsgrades geschieht folgendermaßen:

Bei einer Inbetriebnahme der Luftfederungsanlage werden die Ventile 6, 7, 9, 10 in Sperrstellung geschaltet. Das Ventil 8 wird dagegen in Durchlassstellung geschaltet. Die Luftfederbälge 1, 2, 3, 4 sind somit vom Kompressor 13 entkoppelt, wogegen der Kompressor 13 über den Lufttrockner 14 mit dem Druckspeicher 5 verbunden ist. Nun wird der in dem Druckspeicher 5 herrschende Druck durch den Drucksensor 11 erfasst. Anschließend wird durch Einschalten des Elektromotors 15 der Kompressor 13 aktiviert, um den Druck in dem Druckspeicher 5 zu erhöhen. Der Druck in dem Druckspeicher 5 wird solange durch einen nicht durch Pausen unterbrochenen Betrieb des Kompressors 13 erhöht, bis ein vorgegebener Wert, z. B. 2 bar, für den Druckanstieg erreicht ist. Nun wird die Zeitspanne bestimmt, die der Kompressor 13 für den Druckanstieg in dem Druckspeicher 5 benötigt hat. Diese Zeitspanne ist ein Maß für den Wirkungsgrad des Kompressors 13 und des von dem Kompressor 13 erzeugten Volumenstromes. Die Steuerung der Elemente der Luftfederungsanlage und die Bestimmung des Wirkungsgrades erfolgt mit Hilfe des Steuergerätes 12. Unter einer Inbetriebnahme der Luftfederungsanlage ist z. B. die Erstinbetriebnahme der Luftfederungsanlage oder eine Inbetriebnahme nach dem Aktivieren einer Zündung eines Fahrzeugs, in welchem die Luftfederungsanlage verbaut ist, zu verstehen.

Die Erfindung sieht vor, den Kompressor 13 in Abhängigkeit des Wirkungsgrades abzuschalten. Die Abschaltung des Kompressors 13 erfolgt durch das Steuergerät 12. Der Wirkungsgrad kann in einem Speicher des Steuergerätes 12 gespeichert werden.

Des Weiteren sieht die Erfindung vor, mittels einer Simulation oder eines Modells eine Temperatur zu ermitteln und den Kompressor 13 in Abhängigkeit der Temperatur abzuschalten, wobei die Temperatur in Anhängigkeit des Wirkungsgrades des Kompressors 13 ermittelt wird. Die Ermittlung der Temperatur und die Abschaltung des Kompressors 13 erfolgt mittels des Steuergerätes 12.

Gemäß einer vorteilhaften Ausgestaltung wird der Kompressor 13 in Abhängigkeit seines Wirkungsgrades und somit in Abhängigkeit des von ihm erzeugten Volumenstromes einer Klasse zugeteilt.

Gemäß einer vorteilhaften Ausführung kann die Zeitspanne in Abhängigkeit der Betriebsspannung des Kompressors 13 und/oder des Druckes der den Kompressor 13 umgebenden Luft korrigiert werden. So kann beispielsweise die bestimmte (gemessene) Zeitspanne mit einem Faktor aus dem Verhältnis zwischen einer Referenz-Betriebsspannung und der gemessenen Betriebsspannung multipliziert werden, um die korrigierte Zeitspanne zu erhalten. Analog kann z. B. die Korrektur der Zeitspanne in Abhängigkeit des Druckes der den Kompressor 13 umgebenden Luft erfolgen. Des Weiteren kann die Klassifizierung regelmäßig, z. B. bei jeder Inbetriebnahme der Luftfederungsanlage, erfolgen, um eine genauere Klassifizierung zu ermöglichen oder Einflüsse von Alterung auf das Verhalten des Kompressors 13 zu berücksichtigen.

In folgender Tabelle ist eine Vorschrift für die Klassifizierung von Kompressoren 13 dargestellt.

| Zeitspanne | < tk1 | ≥ tk1 und ≤ tk3 | > tk3 |
|---|---|---|---|
| Klasse | 1 | 2 | 3 |
| Kompressor | A | B | C |

Kompressoren 13, die für den Anstieg des Drucks in dem Druckspeicher 5 um einen festgelegten Wert eine Zeitspanne benötigen, die unterhalb tk1 liegt, werden der Klasse 1 zugeteilt. In diesem Fall der Kompressor A. Kompressoren 13, deren Zeitspanne größer gleich tk1 und kleiner gleich tk3 beträgt, werden der Klasse 2 zugeteilt. In diesem Fall der Kompressor B. Kompressoren 13, die eine Zeitspanne größer tk3 benötigen, werden der Klasse 3 zugeteilt. In diesem Fall der Kompressor C. Es gilt tk1 kleiner tk3. Hieraus folgt, dass der Wirkungsgrad der Kompressoren 13, also der von dem jeweiligen Kompressor 13 erzeugte Volumenstrom, mit steigender Klasse abnimmt. In diesem Fall existieren drei Klassen 1, 2 und 3. Gemäß einer vorteilhaften Ausführung kann die Vorschrift zur Klassifizierung an das Volumen des Druckspeichers 5 und an den Kompressortyp angepasst werden. So können die Anzahl der Klassen und/oder die Zeitspanne an das Volumen des Druckspeichers 5 und der Typenklasse, bzw. der Nennleistung des Kompressors 13 angepasst werden. So kann z. B. die Anzahl der Klassen mit zunehmenden Volumen des Druckspeichers 5 und/oder zunehmender Nennleistung des Kompressors 13 ansteigen.

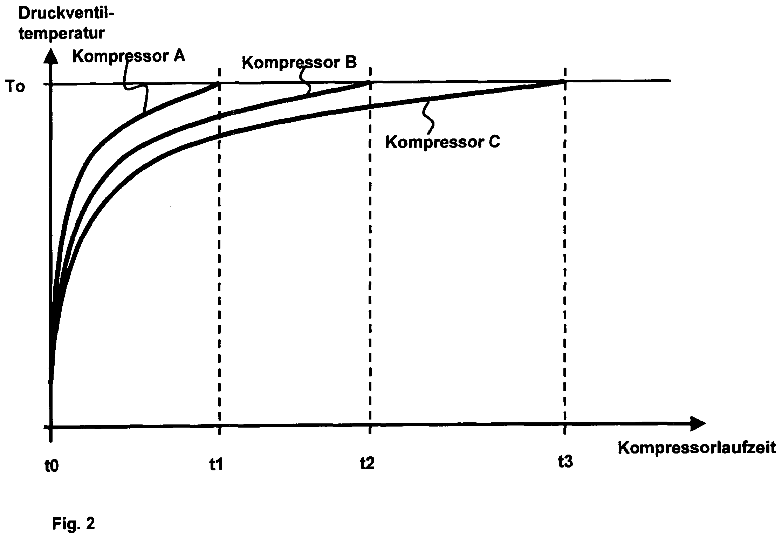

In Fig. 2 ist ein Diagramm dargestellt, welches die anhand einer Simulation ermittelte Temperatur des Druckventils 20 dreier Kompressoren 13 unterschiedlicher Klasse gemäß der oben stehenden Tabelle in Abhängigkeit der Laufzeit des jeweiligen Kompressors 13 zeigt. Die obere Temperaturgrenze des Druckventils 20, bei der der jeweilige Kompressor 13 abzuschalten ist, um Schäden zu vermeiden, ist in dem Diagramm mit To bezeichnet und durch eine horizontale Linie dargestellt. Dem Diagramm ist zu entnehmen, dass die Temperatur der drei Kompressoren 13 jeweils ausgehend vom Zeitpunkt t0 nach einer Exponentialfunktion ansteigt.

Die Temperatur des Druckventils 20 des der Klasse 1 zugeteilten Kompressors A erreicht wegen seines hohen Wirkungsgrades die obere Temperaturgrenze schon zum Zeitpunkt t1. Nach dem Erreichen des Zeitpunktes t1 muss der Kompressor A abgeschaltet werden, um Schäden zu vermeiden.

Die Temperatur des Druckventils 20 des der Klasse 2 zugeteilten Kompressors B erreicht die obere Temperaturgrenze zum Zeitpunkt t2. Nach dem Erreichen des Zeitpunktes t2 muss der Kompressor B abgeschaltet werden, um Schäden zu vermeiden.

Die Temperatur des Druckventils 20 des der Klasse 3 zugeteilten Kompressors C erreicht wegen seines geringen Wirkungsgrades die obere Temperaturgrenze erst zum Zeitpunkt t3. Nach dem Erreichen des Zeitpunktes t3 muss der Kompressor C abgeschaltet werden, um Schäden zu vermeiden.

Durch die Klassifizierung der Kompressoren 13 und die Ermittlung der Temperatur in Abhängigkeit der zugeteilten Klasse ermöglicht die Erfindung den Betrieb des Kompressors A bis zum Zeitpunkt t1, den Betrieb des Kompressors B bis zum Zeitpunkt t2 und den Betrieb des Kompressors C bis zum Zeitpunkt t3. Ohne die Klassifizierung oder die Berücksichtigung des Wirkungsgrades des jeweiligen Kompressors 13 bei der Ermittlung der Temperatur ist der Betrieb der Kompressoren A, B und C nur bis zum Zeitpunkt t1 möglich, da zur sicheren Vermeidung einer Beschädigung immer von einem Kompressor 13 mit einem hohen Wirkungsgrad auszugehen ist. Die Erfindung ermöglicht daher eine sehr gute Ausnutzung der Kompressoren A, B und C, unabhängig von deren Wirkungsgrad.

Die Ermittlung der Temperatur des Druckventils 20 des Kompressors 13 in Abhängigkeit der zugeteilten Klasse kann auf verschiedene Arten erfolgen. So können z. B. in dem Steuergerät 12 Kennlinienfelder hinterlegt sein, anhand derer die Temperatur in Abhängigkeit der Klasse ermittelt wird, wobei die Kennlinienfelder aus einzelnen Kennlinien gemäß Fig. 2, die für eine bestimmte Umgebungstemperatur, Gegendruck und Betriebsspannung des Kompressors 13 Gültigkeit haben, zusammengesetzt sind. Die Kennlinien können dabei z. B. durch eine Simulation oder auch experimentell ermittelt werden.

Es ist aber auch möglich die Temperatur in Abhängigkeit der Klasse durch eine mathematische Formel zu ermitteln. Neben der Klasse kann diese Formel auch andere Parameter, wie Umgebungstemperatur, Gegendruck und Betriebsspannung des Kompressors 13, umfassen.

Ein Beispiel für die Ermittlung der Temperatur, z. B. des Druckventils 20, in Abhängigkeit der Klasse durch eine mathematische Formel stellt nachstehende Formel dar:

$$T = KA * \left[1 - e^{(-KZ*t)}\right] + T0 \, .$$

In der Formel bezeichnen T die zu ermittelnde Temperatur des Druckventils 20, KA und KZ von der Klasse abhängige Konstanten, t die Zeit seit einem Einschaltzeitpunkt des Kompressors 13 und T0 die am Einschaltzeitpunkt des Kompressors 13 am Druckventil 20 herrschende Temperatur. Die Konstanten KA und KZ können z. B. experimentell ermittelt werden. Die Temperatur T0 kann z. B. die mit einem Temperatursensor gemessene Umgebungstemperatur des Kompressors 13 sein, für den Fall, dass der Kompressors 13 für einen längeren Zeitraum nicht betrieben wurde und somit der Kompressor die Umgebungstemperatur aufweist. T0 kann aber auch z. B. anhand der Temperatur des Druckventils 20 zum Abschaltzeitpunkt des Kompressors 13 eines vorherigen Abschaltvorgangs des Kompressors 13 ermittelt werden.

**Patentansprüche**

1. Verfahren zur Steuerung eines Kompressors (13), wobei mit Hilfe einer Simulation oder eines Modells eine Größe ermittelt wird und der Kompressor (13) in Abhängigkeit von der ermittelten Größe abgeschaltet werden kann, wobei die Größe eine Temperatur ist, **dadurch gekennzeichnet, dass** die Temperatur in Abhängigkeit eines Wirkungsgrades des Kompressors (13) ermittelt wird.

2. Verfahren nach Anspruch 1, **dadurch gekennzeichnet, dass** der Kompressor (13) in Abhängigkeit seines Wirkungsgrades einer Klasse zugeteilt wird und die Temperatur in Abhängigkeit der zugeteilten Klasse ermittelt wird.

3. Verfahren nach einem der vorherigen Ansprüche 1 oder 2, **dadurch gekennzeichnet, dass** die Abschaltung in Abhängigkeit einer ermittelten Temperatur eines in dem Kompressor (13) vorhandenen Druckventils (20) und/oder in Abhängigkeit einer ermittelten Temperatur eines in dem Kompressor (13) vorhandenen Kolbenrings und/oder in Abhängigkeit einer ermittelten Temperatur eines den Kompressor (13) antreibenden Elektromotors (15) erfolgen kann.

4. Verfahren nach einem der vorherigen Ansprüche, **dadurch gekennzeichnet, dass** der Wirkungsgrad des Kompressors (13) mittels einer Zeitspanne bestimmt wird, die der Kompressor (13) für einen Anstieg eines Druckes in einem Druckspeicher (5), der von dem Kompressor (13) mit Druckmittel versorgt wird, um einen festgelegten Wert benötigt.

5. Verfahren nach Anspruch 4, **dadurch gekennzeichnet, dass** die Bestimmung des Wirkungsgrades automatisch erfolgt.

6. Verfahren nach Anspruch 4 oder 5, **dadurch gekennzeichnet, dass** die Zeitspanne in Abhängigkeit einer Betriebsspannung des Kompressors (13) und/oder eines Druckes der den Kompressor (13) umgebenden Luft korrigiert wird.

7. Verfahren nach einem der vorherigen Ansprüche, **dadurch gekennzeichnet, dass** eine Bestimmung des Wirkungsgrades des Kompressors (13) und/oder eine Klassifizierung des Kompressors (13) bei einer Inbetriebnahme eines Systems, in dem der Kompressor (13) verbaut ist, durchgeführt wird.

8. Verfahren nach einem der vorherigen Ansprüche, **dadurch gekennzeichnet, dass** im Rahmen einer Inspektion des Systems eine erneute Bestimmung des Wirkungsgrades des Kompressors (13) und/oder eine erneute Klassifizierung des Kompressors (13) erfolgt.

9. Verfahren nach einem der vorherigen Ansprüche, **dadurch gekennzeichnet, dass** eine regelmäßige Bestimmung des Wirkungsgrades des Kompressors (13) und/oder eine regelmäßige Klassifizierung des Kompressors (13) erfolgt.

10. Verfahren nach Anspruch 9, **dadurch gekennzeichnet, dass** eine Änderung der Klasse nur erfolgt, falls eine bestimmte Anzahl von aufeinander folgenden Klassifizierungen mit dem gleichen Ergebnis erreicht wird.

11. Verfahren nach Anspruch 10, **dadurch gekennzeichnet, dass** die benötigte Anzahl für eine Erhöhung der Klasse kleiner als die für eine Verringerung der Klasse ist.

12. Verfahren nach einem der vorherigen Ansprüche 2 bis 11, **dadurch gekennzeichnet, dass** die Klassifizierung in Abhängigkeit eines Volumens des Druckspeichers (5) und des Kompressortyps erfolgt.

13. Verfahren nach einem der vorherigen Ansprüche, **dadurch gekennzeichnet, dass** der Kompressor (13) in einem Fahrzeug eingesetzt wird.

14. Verfahren nach einem der vorherigen Ansprüche, **dadurch gekennzeichnet, dass** der Kompressor (13) in einem Luftfedersystem eingesetzt wird.

15. Verfahren nach einem der vorherigen Ansprüche 2 bis 14, **dadurch gekennzeichnet, dass** die Temperatur anhand der Formel

$$T = KA * \left[1 - e^{(-KZ*t)}\right] + T0$$

ermittelt wird, wobei T die zu ermittelnde Temperatur, KA und KZ von der zugeteilten Klasse abhängige Konstanten, t die Zeit seit einem Einschaltzeitpunkt des Kompressors (13) und T0 die am Einschaltzeitpunkt des Kompressors (13) herrschende Temperatur bezeichnen.

16. Vorrichtung zur Steuerung eines Kompressors (13), wobei mit Hilfe einer Simulation oder eines Modells eine Größe ermittelbar ist und der Kompressor (13) in Abhängigkeit von der ermittelten Größe abschaltbar ist, wobei die Größe eine Temperatur ist, **gekennzeichnet durch** Mittel, welche die Temperatur in Abhängigkeit des Wirkungsgrades des Kompressors (13) ermitteln.

**Claims**

1. Method for controlling a compressor (13), wherein a variable is determined using a simulation or a model, and the compressor (13) can be switched off as a function of the determined variable, wherein the variable is a temperature, **characterized in that** the temperature is determined as a function of an efficiency level of the compressor (13).

2. Method according to Claim 1, **characterized in that** the compressor (13) is assigned to a class as a function of its efficiency level, and the temperature is determined as a function of the assigned class.

3. Method according to one of the preceding Claims 1 and 2, **characterized in that** the switching off can take place as a function of a determined temperature of a pressure valve (20) present in the compressor (13) and/or as a function of a determined temperature of a piston ring present in the compressor (13) and/or as a function of a determined temperature of an electric motor (15) which drives the compressor (13).

4. Method according to one of the preceding claims, **characterized in that** the efficiency level of the compressor (13) is determined by means of a time period which the compressor (13) requires for a rise in a pressure in a pressure accumulator (5) by a defined value, said pressure accumulator (5) being supplied with pressure medium by the compressor (13).

5. Method according to Claim 4, **characterized in that** the efficiency level is determined automatically.

6. Method according to Claim 4 or 5, **characterized in that** the time period is corrected as a function of an operating voltage of the compressor (13) and/or of a pressure of the air surrounding the compressor (13).

7. Method according to one of the preceding claims, **characterized in that** the efficiency level of the compressor (13) is determined and/or the compressor (13) is classified when a system in which the compressor (13) is installed is put into operation.

8. Method according to one of the preceding claims, **characterized in that** within the scope of an inspection of the system a renewed determination of the efficiency level of the compressor (13) and/or a renewed classification of the compressor (13) is carried out.

9. Method according to one of the preceding claims, **characterized in that** the efficiency level of the compressor (13) is determined on a regular basis and/or the compressor (13) is classified on a regular basis.

10. Method according to Claim 9, **characterized in that** the class is changed only if a specific number of successive classifications with the same result is reached.

11. Method according to Claim 10, **characterized in that** the required number for an increase in the class is less than that for a reduction in the class.

12. Method according to one of the preceding Claims 2 to 11, **characterized in that** the classification takes place as a function of a volume of the pressure accumulator (5) and of the type of compressor.

13. Method according to one of the preceding claims, **characterized in that** the compressor (13) is used in a vehicle.

14. Method according to one of the preceding claims, **characterized in that** the compressor (13) is used in an air spring system.

15. Method according to one of the preceding Claims 2 to 14, **characterized in that** the temperature is determined by means of the formula

$$T = KA * \left[1 - e^{(-KZ*t)}\right] + T0$$

where T denotes the temperature to be determined, KA and KZ denote constants which are dependent on the assigned class, t denotes the time since a switch-on time of the compressor (13) and T0 denotes the temperature prevailing at the switch-on time of the compressor (13).

16. Device for controlling a compressor (13), wherein a variable can be determined using a simulation or a model, and the compressor (13) can be switched off as a function of the determined variable, wherein the variable is a temperature, **characterized by** means which determine the temperature as a function of the efficiency level of the compressor (13).

**Revendications**

1. Procédé destiné à la commande d'un compresseur (13), dans lequel une grandeur est déterminée à l'aide d'une simulation ou d'un modèle et le compresseur (13) peut être désactivé en fonction de la grandeur déterminée, dans lequel la grandeur est une température, **caractérisé en ce que** la température est déterminée en fonction d'un rendement du compresseur (13).

2. Procédé selon la revendication 1, **caractérisé en ce que** le compresseur (13) est affecté à une classe en fonction de son rendement et **en ce que** la température est déterminée en fonction de la classe affectée.

3. Procédé selon l'une quelconque des revendications 1 ou 2 précédentes, **caractérisé en ce que** la désactivation peut s'effectuer en fonction d'une température déterminée d'une soupape de pression (20) présente dans le compresseur (13) et/ou en fonction d'une température déterminée d'un segment de piston présent dans le compresseur (13) et/ou en fonction d'une température déterminée d'un moteur électrique (15) entraînant le compresseur (13).

4. Procédé selon l'une quelconque des revendications précédentes, **caractérisé en ce que** le rendement du compresseur (13) est déterminé au moyen d'un intervalle de temps qui est nécessaire au compresseur (13) pour atteindre une valeur fixée pour une augmentation d'une pression dans un accumulateur de pression (5) alimenté en fluide de pression par le compresseur (13).

5. Procédé selon la revendication 4, **caractérisé en ce que** la détermination du rendement s'effectue automatiquement.

6. Procédé selon la revendication 4 ou 5, **caractérisé en ce que** l'intervalle de temps est corrigé en fonction d'une tension de fonctionnement du compresseur (13) et/ou d'une pression de l'air à proximité du compresseur (13).

7. Procédé selon l'une quelconque des revendications précédentes, **caractérisé en ce qu'**on effectue une détermination du rendement du compresseur (13) et/ou une classification du compresseur (13) pour une mise en service d'un système dans lequel est intégré le compresseur (13).

8. Procédé selon l'une quelconque des revendications précédentes, **caractérisé en ce qu'**on effectue une nouvelle détermination du rendement du compresseur (13) et/ou une nouvelle classification du compresseur (13) dans le cadre d'une inspection du système.

9. Procédé selon l'une quelconque des revendications précédentes, **caractérisé en ce qu'**on effectue une détermination régulière du rendement du compresseur (13) et/ou une classification régulière du compresseur (13).

10. Procédé selon la revendication 9, **caractérisé en ce qu'**une modification de la classe n'est effectuée que dans le cas où un nombre déterminé de classifications consécutives est atteint avec un même résultat.

11. Procédé selon la revendication 10, **caractérisé en ce que** le nombre nécessaire pour une augmentation de la classe est inférieur à celui qui correspond à une diminution de la classe.

12. Procédé selon l'une quelconque des revendications 2 à 11 précédentes, **caractérisé en ce que** la classification est effectuée en fonction d'un volume de l'accumulateur de pression (5) et du type de compresseur.

13. Procédé selon l'une quelconque des revendications précédentes, **caractérisé en ce que** le compresseur (13) est installé dans un véhicule.

14. Procédé selon l'une quelconque des revendications précédentes, **caractérisé en ce que** le compresseur (13) est mis en oeuvre dans un système de ressort pneumatique.

15. Procédé selon l'une quelconque des revendications 2 à 14 précédentes, **caractérisé en ce que** la température est déterminée sur la base de la formule suivante :

$$T = KA * [1 - e^{(-KZ*t)}] + T0$$

où T est la température déterminée, KA et KZ sont des constantes dépendant de la classe attribuée, t est le temps s'étant écoulé depuis un instant d'activation du compresseur (13) et T0 est la température observée à l'instant d'activation du compresseur (13).

16. Dispositif destiné à la commande d'un compresseur (13), dans lequel une grandeur peut être déterminée à l'aide d'une simulation ou d'un modèle et le compresseur (13) peut être désactivé en fonction de la grandeur déterminée, dans lequel la grandeur est une température, **caractérisé par** des moyens qui déterminent la température en fonction du rendement du compresseur (13).

Fig. 1

Fig. 2

EP 1 961 960 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19621946 C1
- DE 19812234 C2
- US 5546015 A